# EUROPEAN PATENT SPECIFICATION

(11) **EP 0 816 734 B1**
(45) Date of publication and mention of the grant of the patent: **10.04.2002**
(21) Application number: 97304561.0
(22) Date of filing: 26.06.1997
(51) Int. Cl.: F16L 3/16, F16L 55/033, B60K 13/04, F01N 7/18, F16F 1/373

(54) **Resilient support**
Elastisches Stützlager
Support élastique

(30) Priority: 02.07.1996 GB 9613978
(43) Date of publication of application: 07.01.1998
(73) Proprietor: TRELLEBORG AB, 231 22 Trelleborg (SE)
(72) Inventor: Barrier, Gonzaque, 44130 Fay-De-Bretagne (FR); Pean, Thomas, 44000 Nantes (FR)
(74) Representative: Foster, David Martyn

(56) References cited:
- EP-A- 0 509 918
- DE-A- 4 125 680
- FR-A- 2 340 834
- US-A- 4 893 778

## Description

The invention relates to resilient supports. A support embodying the invention, and to be described by way of example only in more detail below, can be used for resiliently supporting an exhaust pipe or other part of an exhaust system in a motor vehicle.

DE-A-412560(Audi)shows an exhaust system support in which a resilient component supports respective mounts for an exhaust system and a motor vehicle. The extent of deformation is limited by a fixed and rigid frame within which the resilient component can operate. The resilient component can be clipped for convenient assembly to one side of the frame but the extent of the deformation can only be varied by providing different sized fixed and rigid frames. Thus, each vehicle type may require a specific combination of resilient component and rigid frame to be effective. This can be expensive.

According to a first aspect of the invention, there is provided a resilient support having two spaced-apart fastening regions, resilient means connecting the two regions and permitting at least a predetermined amount of resiliently resisted movement apart of the two regions under tensile forces acting between them, and substantially inextensible means to freely allow the predetermined amount of movement apart of the two regions but substantially resisting further such movement, characterised in that the inextensible means is flexible and releasably secured to both fastening regions and extends between those two regions with a predetermined length such as to control the extent of the permitted predetermined amount of resilient resisted movement.

According to a second aspect of the invention, there is further provided a resilient support for resiliently supporting part of the exhaust system of a motor vehicle, the support having moulded elastomeric material defining first and second spaced apart attachment regions, at least one member of bent configuration integrally extending between the two regions and permitting resiliently resisted movement of the two regions towards and away from each other by respective predetermined amounts under compressive and tensile forces applied between the two regions, the predetermined amounts of resisted movement being controlled by inextensible material about the moulded elastomeric material, each region defining attachment means enabling the regions to be respectively attached to part of the exhaust system and to an adjacent part of the vehicle body, the support being characterised in that the inextensible material is a continuous belt made of substantially inextensible flexible material releasably secured to both the said regions and extending around the elastomeric material to provide substantial resistance to movement apart of the two regions beyond the said predetermined amount.

Resilient supports embodying the invention will now be described, by way of example only, with reference to the accompanying diagrammatic drawings in which:
Figure 1 is a perspective view of an exhaust system in a motor vehicle body, showing the manner in which the resilient support may be used;
Figure 2 is a perspective view of one of the resilient supports in its relaxed condition;
Figure 3 is a perspective view corresponding to Figure 2 but showing the resilient support under extended tension;
Figure 4 is a graph for explaining the operation of the resilient support of Figures 2 and 3; and
Figures 5A and 5B are sections through part of the support of Figures 2 and 3 for use in explaining its operation.

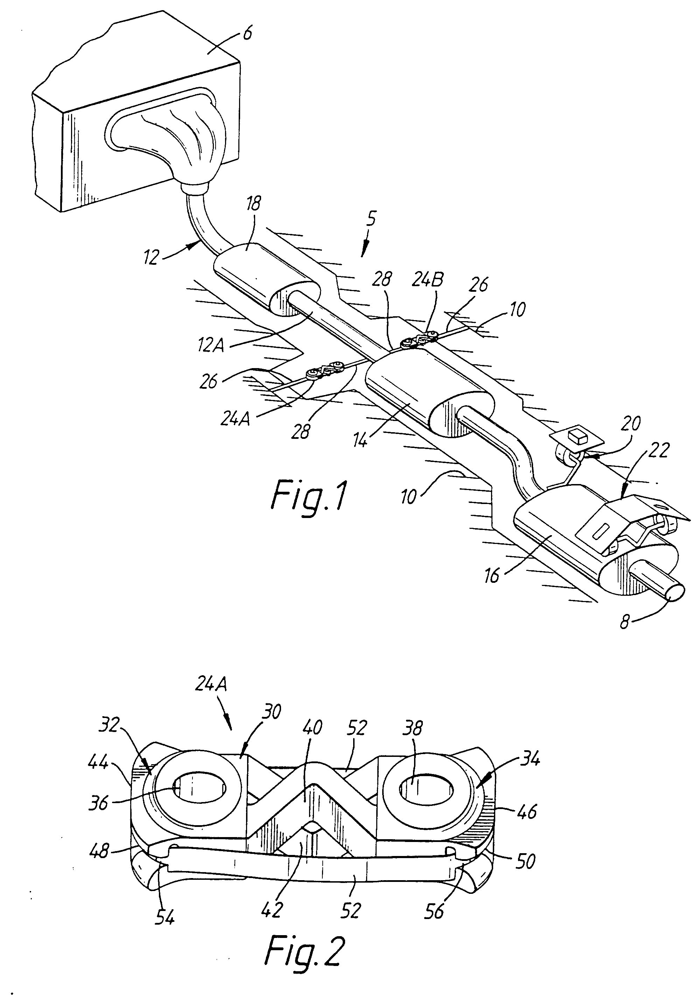

Figure 1 shows the exhaust system 5 of a motor vehicle, leading from the engine 6 to the exhaust pipe outlet 8. The exhaust system runs within a longitudinal gap 9 formed in the chassis or underbody of the vehicle, adjacent body parts being shown, for example, at 10. The exhaust system 5 comprises a pipe 12, intermediate and final silencer units 14,16 and a catalytic unit 18. The arrangement of the exhaust system 5 can vary according to the vehicle type and is shown purely by way of example in Figure 1.

The exhaust system must be flexibly supported from the vehicle body or chassis in a manner which allows it limited amount of movement, relative to the body or chassis, including movement caused by vibration of the engine 6 to which it is attached. It must be supported in such a way that this movement does not cause noise or vibration and so that the exhaust system cannot move sufficiently far, under conditions of severe shock, as to come into contact with the adjacent chassis or underbody part 10.

By way of example, Figure 1 shows how the silencer 16 can be supported by flexible and resilient supports 20,22 which incorporate resilient material attaching the silencer to the vehicle under body. These supports 20,22 are not relevant to the present invention and will not be further described.

In addition, Figure 1 shows how an exhaust pipe portion 12A is supported between adjacent underbody parts 10 by resilient supports 24A and 24B. The Figure shows how the resilient support 24A is connected by a rigid hook 26 to the adjacent vehicle underbody part 10 and by a rigid hook 28 to the exhaust pipe part 12A. Support 24B is similarly mounted.

Figure 1 shows the supports 24A and 24B in diagrammatic and simplified form only. They will now be described in more detail with reference to Figures 2,3,4,5A and 5B.

As shown in Figure 2, the support 24A (support 24B being the same) comprises a main body 30 moulded from elastomeric material such as rubber. The body 30 comprises two end parts 32 and 34 each of which defines a through bore 36,38. The two end parts 32,34 are integrally connected by elastomeric material defining two arms 40, 42, each arm being of bent or "V" configuration. The configuration of the two arms 40,42 renders them more flexible than the end parts 32,34. If desired, however, the arms 40,42 can be given greater flexibility by moulding them from more flexible material than the end parts 32,34.

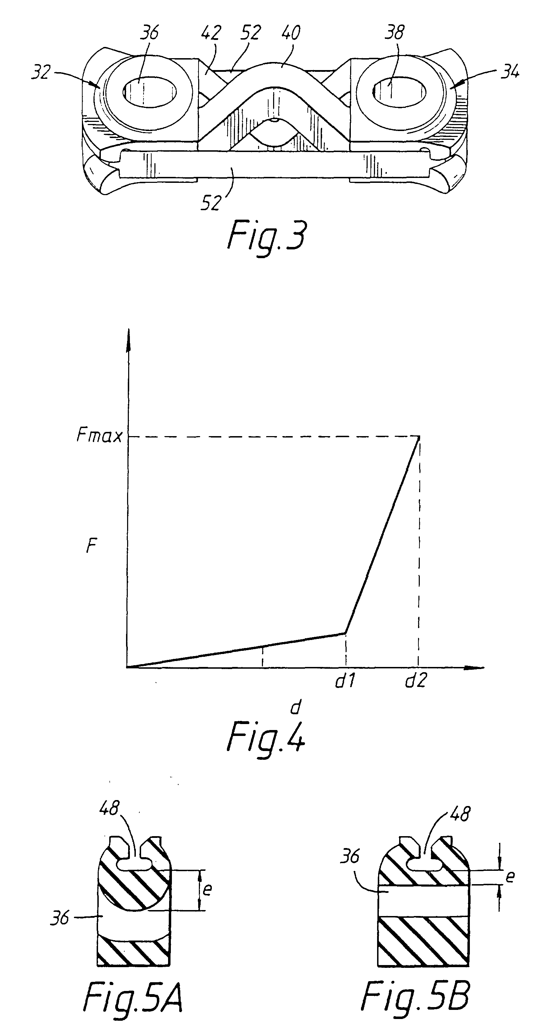

The respective faces 44,46 of the two end parts 32 and 34 define slots 48,50 which are shown in cross-section in Figures 5A and 5B, these Figures showing alternative possible configurations for the slots and for the through bores 36 and 38 and the adjacent material. In Figure 5A, the through bores 36 and 38 are shown to be curved, while in Figure 5B they are shown to be straight.

The support is completed by a separate belt 52 of substantially inextensible textile material such as polyester, the belt being continuous or having its two ends firmly secured together and having two portions 54 and 56 which are of reduced width and which engage in the grooves 48,50.

In use, the ends of the hooks 26,28 (Figure 1) engage in and through the bores 36 and 38 of the support.

Normal vibratory movement of the exhaust system 5 (Figure 1) relative to the vehicle underbody parts 10 is absorbed and accommodated by flexure of the arms 40,42. The supports 24A,24B thus resiliently hold the exhaust system 5 in position relative to and between the underbody parts 10. The arms 40,42 absorb both compression and tension. The belt 52 is relatively loosely fitted around the main body 30 and does not come under tension during normal vibratory movement of the exhaust system.

However, if the exhaust system is subjected to severe shock, one or other of the two supports 24A and 24B may be subjected to increased tension. Under these conditions, the arms 40,42 will stretch further, until the belt 52 itself becomes under tension. As already stated, the belt 52 is substantially inextensible, and the result is that further stretching of the support is substantially prevented.

The graph in Figure 4 shows (region A) how the resistive force *F* increases at a relatively low rate as the support is stretched from its fully relaxed configuration to a condition where it is stretched to an extent *d1*. When the support has been stretched to the extent *d1*, the belt 52 comes under tension. Because the belt 52 is substantially inextensible, the resistive force *F* increases rapidly with displacement *d* over the region B, until maximum resistive force, *Fmax,* is reached at a displacement *d2.* Over the region B, the resistive force is dependent on the (very low) extensibility of the belt 52 and also on the compressibility of the elastomeric material acting between the belt and each rigid hook 26,28 (see Fig. 1). This compressibility of the elastomeric material is dependent in turn on the thickness, e, of the elastomeric material between the base of each slot 48,50 and the adjacent inner curved surface of the respective bore 36,38 - the belt being in contact with the base of the respective slot 48,50 and the rigid hook 26,28 being in contact with the adjacent inner surface of the respective bore 36,38. The elastomeric material defining the thickness e is relatively stiff.

It will be understood that the ultimate extensibility of the support depends primarily on the peripheral length of the belt 52. It is thus a simple matter to adjust the maximum extensibility of the support simply by removing the belt 52 and replacing it with another belt of appropriately different length.

Therefore, it is a simple matter to manufacture a range of supports each suited to a different application: the main body 30 will be the same for each support, but the peripheral length of the surrounding belt 52 can be different. This reduces manufacturing costs - as compared, for example, with supports having integrally moulded means for limiting maximum extensibility.

The supports illustrated and described above have clear separation between the region A (Figure 4), during which the resistive force *F* increases at a relatively low rate as the extension *d* increases, and the region B over which the resistive force *F* increases very rapidly with extension *d.* The value *d1* defining the separation between region A and region B can be easily adjusted simply by replacing the belt 52 with a belt of different peripheral length.

## Claims

1. A resilient support having two spaced-apart fastening regions (32,34), resilient means (40,42) connecting the two regions (32,34) and permitting at least a predetermined amount of resiliently resisted movement apart of the two regions (32,34) under tensile forces acting between them, and substantially inextensible means to freely allow the predetermined amount of movement apart of the two regions (32,34) but substantially resisting further such movement, **characterised in that** the inextensible means (32) is flexible and releasably secured to both fastening regions (32,34) and extends between those two regions (32,34) with a predetermined length such as to control the extent of the permitted predetermined amount of resilient resisted movement.

2. A support according to claim 1, **characterised in that** the resilient means (40,42) has a relaxed condition in which it holds the two regions (32,34) spaced apart by a datum distance from which the resiliently resisted movement apart of the two regions (32,34) occurs and from which resiliently resisted movement of the two regions (32,34) towards each other is permitted.

3. A support according to claim 1 or 2, **characterised in that** the resilient means (40,42) and the said regions (32,34) are integrally moulded.

4. A support according to claim 3, **characterised in that** the resilient means (40,42) comprises a member (40,42) of resilient material extending between the two regions (32,34) but with bent configuration whereby to become partially straightened by the movement apart of the two regions (32,34) and increasingly bent by movement of the two regions (32,34) towards each other.

5. A support according to any preceding claim, **characterised in that** the substantially inextensible flexible means (52) comprises a continuous belt (52) of predetermined peripheral length.

6. A support according to claim 5, **characterised in that** each said region (32,34) defines a groove (48,50) for locating part of the belt.

7. A support according to any preceding claim, **characterised in that** each said region comprises means (32,34) defining a hole, aperture or recess (36,38).

8. A resilient support for resiliently supporting part of the exhaust system (5) of a motor vehicle, the support having moulded elastomeric material defining first and second spaced apart attachment regions (32,34), at least one member (40,42) of bent configuration integrally extending between the two regions (32,34) and permitting resiliently resisted movement of the two regions (32,34) towards and away from each other by respective predetermined amounts under compressive and tensile forces applied between the two regions (32,34), the predetermined amounts of resisted movement being controlled by inextensible material about the moulded elastomeric material, each region (32,34) defining attachment means (36,38) enabling the regions (32,34) to be respectively attached to part of the exhaust system (5) and to an adjacent part of the vehicle body, the support being **characterised in that** the inextensible material is a continuous belt (52) made of substantially inextensible flexible material releasably secured to both the said regions (32,34) and extending around the elastomeric material to provide substantial resistance to movement apart of the two regions (32,34) beyond the said predetermined amount.

9. A support according to claim 8, **characterised in that** each attachment means comprises a respective aperture (36,38) for receiving a respective substantially rigid connecting member (26,28).

10. A support according to claim 8 or 9, **characterised in that** each said region (32,34) defines a respective groove (48,50) for receiving a respective part of the belt (52).

## Patentansprüche

1. Elastisches Lager mit zwei voneinander beabstandeten Befestigungsbereichen (32, 34), einem elastischen Mittel (40, 42), das die zwei Bereiche (32, 34) miteinander verbindet und unter zwischen diesen wirkenden Zugkräften mindestens mit vorbestimmtem Wert eine elastisch widersetzte Auseinanderbewegung dieser zwei Bereiche (32, 34) zuläßt und mit einem im wesentlichen nicht dehnbaren Mittel, das mit vorbestimmtem Wert die Auseinanderbewegung der beiden Bereiche (32, 34) gestattet, aber sich im wesentlichen weiterer derartiger Bewegung widersetzt, **dadurch gekennzeichnet, daß** das dehnbare Mittel (32) flexibel und elastisch an den beiden Befestigungsbereichen (32, 34) angebracht ist und sich mit vorbestimmter Länge zwischen diesen beiden Bereichen so erstreckt, daß das Ausmaß des vorbestimmten Werts der elastisch widersetzten Bewegung geregelt wird.

2. Lager nach Anspruch 1 **dadurch gekennzeichnet, daß** das elastische Mittel (40, 42) einen entspannten Zustand aufweist, in dem es die beiden Bereiche (32, 34) mit einem gegebenen Abstand auseinanderhält, von dem die elastisch widersetzte Auseinanderbewegung der beiden Bereiche (32, 34) ausgeht und von dem die elastisch widersetzte Bewegung der beiden Bereiche (32, 34) gegeneinander gestattet ist.

3. Lager nach Anspruch 1 oder 2, **dadurch gekennzeichnet, daß** das elastische Mittel (40, 42) und die beiden Bereiche (32, 34) einteilig geformt sind.

4. Lager nach Anspruch 3, **dadurch gekennzeichnet, daß** das elastische Mittel (40, 42) ein Teil (40, 42) aus elastischem Material aufweist, das sich zwischen die beiden Bereiche (32, 34) jedoch mit gekrümmter Form erstreckt, wodurch bei der Auseinanderbewegung der beiden Bereiche (32, 34) eine teilweise Streckung und bei der Aneinanderbewegung der beiden Bereiche (32, 34) eine zunehmende Krümmung erfolgt.

5. Lager nach einem der vorhergehenden Ansprüche, **dadurch gekennzeichnet, daß** das im wesentlichen nicht dehnbare flexible Mittel (52) ein endloses Band (52) mit vorbestimmter Umfangslänge aufweist.

6. Lager nach Anspruch 5, **dadurch gekennzeichnet, daß** in jedem Bereich (32, 34) eine Nut (48, 50) zur Aufnahme eines Teils des Bands vorgesehen ist.

7. Lager nach einem der vorhergehenden Ansprüche, **dadurch gekennzeichnet, daß** jeder Bereich ein Mittel (32, 34) aufweist, in dem ein Loch, eine Öffnung oder eine Aussparung (36, 38) vorgesehen ist.

8. Elastisches Lager zur elastischen Lagerung eines Teil des Auspuffsystems (5) eines Kraftfahrzeugs, wobei das Lager aus einem geformtem elastischen Material besteht, mit ersten und zweiten voneinander beabstandeten Befestigungsbereichen (32, 34), wenigstens einem Teil (40, 42) mit gekrümmter Form,- das sich einteilig zwischen den beiden Bereichen (32, 34) erstreckt und unter Wirkung von Druck- und Zugkräften, die zwischen den beiden Bereichen (32, 34) eingebracht werden, eine elastisch widersetzte Bewegung der beiden Bereiche (32, 34) gegeneinander und voneinander mit jeweils vorbestimmten Werten gestatten, wobei die vorbestimmten Werte der widersetzten Bewegung durch nicht dehnbares, über das geformte elastische Material aufgebrachte Material geregelt wird, wobei jeder Bereich ein Befestigungsmittel (36, 38) aufweist, das eine Festlegung der Bereiche (32, 34) jeweils an einem Teil des Auspuffsystems (5) und einem gegenüberliegenden Teil der Fahrzeugkarosserie gestattet, wobei das Lager **dadurch gekennzeichnet ist, daß** das nicht dehnbare Material ein endloses Band (52) ist, das aus einem im wesentlichen nicht dehnbaren flexiblen Material besteht und lösbar an den beiden Bereichen (32, 34) festgelegt ist und sich über das elastomere Material erstreckt, um einen erheblichen Widerstand gegen die Auseinanderbewegung der Bereiche (32, 34) oberhalb des vorbestimmten Werts zu bewirken.

9. Lager nach Anspruch 8, **dadurch gekennzeichnet, daß** jedes Befestigungsmittel eine jeweilige Öffnung (36, 38) zur Aufnahme eines jeweiligen im wesentlichen starren Verbindungsteils (26, 28) aufweist.

10. Lager nach Anspruch 8 oder 9, **dadurch gekennzeichnet, daß** jeder Bereich (32, 34) eine jeweilige Nut (48, 50) zur Aufnahme eines jeweiligen Teils des Bands (52) aufweist.

## Revendications

1. Support élastique ayant deux régions distantes de fixation (32, 34), un dispositif élastique (40, 42) raccordant les deux régions (32, 34) et permettant une amplitude prédéterminée au moins de déplacement des deux régions (32, 34) en présence d'une résistance élastique sous l'action de forces de traction agissant entre elles, et un dispositif pratiquement inextensible destiné à permettre l'amplitude prédéterminée de déplacement des deux régions (32, 34) de manière pratiquement libre mais résistant pratiquement à un déplacement plus important, **caractérisé en ce que** le dispositif inextensible (32) est flexible et fixé de façon amovible aux deux régions de fixation (32, 34), et il s'étend entre ces deux régions (32, 34) avec une longueur prédéterminée telle que la valeur de l'amplitude prédéterminée permise de déplacement élastique en présence d'une résistance est réglée.

2. Support selon la revendication 1, **caractérisé en ce que** le dispositif élastique (40, 42) a un état relaxé dans lequel il maintient les deux régions (32, 34) séparées par une distance de référence à partir de laquelle se produit le déplacement par écartement des deux régions (32, 34) en présence d'une résistance élastique et à partir de laquelle le déplacement des deux régions (32, 34) l'une vers l'autre en présence d'une résistance élastique est permise.

3. Support selon la revendication 1 ou 2, **caractérisé en ce que** le dispositif élastique (40, 42) et lesdites régions (32, 34) sont moulés en une seule pièce.

4. Support selon la revendication 3, **caractérisé en ce que** le dispositif élastique (40, 42) comprend un organe (40, 42) de matériau élastique qui s'étend entre les deux régions (32, 34) mais avec une configuration courbée telle qu'il s'aligne partiellement par écartement des deux régions (32, 34) et se courbe de plus en plus lors du rapprochement des deux régions (32, 34).

5. Support selon l'une quelconque des revendications précédentes, **caractérisé en ce que** le dispositif flexible pratiquement inextensible (52) comporte une ceinture continue (52) de longueur périphérique prédéterminée.

6. Support selon la revendication 5, **caractérisé en ce que** chaque région (32, 34) délimite une gorge (48, 50) de positionnement d'une partie de la ceinture.

7. Support selon l'une quelconque des revendications précédentes, **caractérisé en ce que** chaque région comporte un dispositif (32, 34) délimitant un trou, un orifice ou une cavité (36, 38).

8. Support élastique destiné à supporter élastiquement une partie du circuit d'échappement (5) d'un véhicule à moteur, le support ayant un matériau élastomère moulé qui délimite une première et une seconde région (32, 34), au moins un organe (40, 42) de configuration courbée s'étendant solidairement entre les deux régions (32, 34) et permettant un déplacement des deux régions (32, 34) avec une résistance élastique afin qu'elles puissent se rapprocher et s'éloigner d'amplitudes respectives prédéterminées sous l'action de forces de compression et de tension qui sont appliquées entre les deux régions (32, 34), les amplitudes prédéterminées de déplacement avec une résistance étant réglées par un matériau inextensible placé autour du matériau élastomère moulé, chaque région (32, 34) délimitant un dispositif de fixation (36, 38) qui permet la fixation respective des régions (32, 34) à une partie du circuit d'échappement (5) et à une partie adjacente de la carrosserie du véhicule, le support étant **caractérisé en ce que** le matériau inextensible est une courroie continue (52) formée d'un matériau flexible pratiquement inextensible fixé de façon amovible aux deux régions (32, 34) et s'étendant autour du matériau élastomère pour imposer une résistance importante au déplacement des deux régions (32, 34) lorsqu'elles s'écartent au-delà de l'amplitude prédéterminée.

9. Support selon la revendication 8, **caractérisé en ce que** chaque dispositif de fixation a un orifice respectif (36, 38) destiné à loger un organe respectif pratiquement rigide de raccordement (26, 28).

10. Support selon la revendication 8 ou 9, **caractérisé en ce que** chaque région (32, 34) délimite une gorge respective (48, 50) de logement d'une partie respective de la ceinture (52).
